Europäisches Patentamt

European Patent Office

Office européen des brevets

(19)

(11) Veröffentlichungsnummer: **0 298 071 B1**

# (12) EUROPÄISCHE PATENTSCHRIFT

(45) Veröffentlichungstag der Patentschrift:
21.11.91 Patentblatt 91/47

(51) Int. Cl.$^5$: **B60C 3/06**

(21) Anmeldenummer: **88890107.1**

(22) Anmeldetag: **04.05.88**

---

(54) **Fahrzeugluftreifen.**

(30) Priorität: **30.06.87 AT 1642/87**

(43) Veröffentlichungstag der Anmeldung:
**04.01.89 Patentblatt 89/01**

(45) Bekanntmachung des Hinweises auf die
Patenterteilung:
**21.11.91 Patentblatt 91/47**

(84) Benannte Vertragsstaaten:
**AT DE FR GB LU**

(56) Entgegenhaltungen:
**DE-A- 1 935 369**
**DE-A- 3 605 339**
**FR-A- 1 444 222**
**FR-A- 1 493 020**
**US-E- 26 713**

(73) Patentinhaber: **Semperit Reifen
Aktiengesellschaft
Wienersdorferstrasse 20-24
A-2514 Traiskirchen (AT)**

(72) Erfinder: **Pecenka, Peter, Dipl.-Ing.
Alois Lutterstrasse 48c
A-2514 Traiskirchen (AT)**

(74) Vertreter: **Vinazzer, Edith
Semperit Reifen Aktiengesellschaft
Patentabteilung Wienersdorferstrasse 20-24
A-2514 Traiskirchen (AT)**

Jouve, 18, rue Saint-Denis, 75001 PARIS

**Beschreibung**

Die Erfindung betrifft einen Fahrzeugluftreifen gemäß dem Oberbegriff des Anspruches 1. Ein derartigen Reifen ist z.B. aus der FR-A-1444222 bekannt.

Es ist bereits eine Anzahl von Fahrzeugluftreifen mit asymmetrischem Querschnitt vorgeschlagen worden. So ist etwa in der DE-OS 3605339 ein Radialreifen dargestellt und beschrieben, bei dem die Karkasse und der Gürtel bezüglich der Reifenmittelebene symmetrisch verlaufen, wohingegen die Lauffläche ein asymmetrisches Außenlinienprofil aufweist. Hierbei wird das Außenlinienprofil der Lauffläche derart gestaltet, daß die dem größten Außendurchmesser entsprechende Stelle mit seitlichem Abstand von der Reifenmittelebene angeordnet ist und die beidseitig dieser Stelle gelegenen Laufflächenabschnitte unterschiedliche Krümmungsradien aufweisen. Mit dieser Asymmetrie im Außenlinienprofil der Lauffläche soll eine ungleichmäßige Abnutzung der Laufflächenseitenabschnitte verhindert werden. Es ist ja bekannt, daß in Abhängigkeit unterschiedlicher Bedingungen der eine Schulterabschnitt einer Lauffläche eine höhere Abnutzung erfährt als der andere Schulterabschnitt. Dieses Problem ist etwa bei LKW-Reifen an Vorderachsen bekannt, wo die Außenschulter, insbesondere beim Kurvenfahren, einem vermehrten Abrieb unterliegt. Bekannt ist es auch, daß sich diese vermehrte Abnutzung des betroffenen Schulterbereiches dadurch verringern läßt, daß der Bodenaufstandsdruck des Reifens in diesem Bereich erhöht wird. Mit den in der genannten DE-OS gesetzten Maßnahmen läßt sich der Bodenaufstandsdruck in jenem Schulterabschnitt erhöhen, der der höchsten Stelle in der Laufflächenaußenlinie benachbart ist. Die Herstellung eines Reifens mit dem vorgeschlagenen asymmetrischen Außenlinienprofil in der Lauffläche ist jedoch insoferne schwierig beziehungsweise problematisch, als daß sich diese Asymmetrie nur durch entsprechende Gestaltung des Laufflächen-Heizformteiles bewerkstelligen läßt. Bei der Fertigung wird nämlich dieser Reifen wie ein herkömmlicher Reifen konfektioniert, durch entsprechende Gestaltung des Laufflächensegmentes der Heizform läßt sich das erwünschte asymmetrische Außenlinienprofil erzielen. Es ist daher erforderlich, einen sehr teuren und auf Grund der Profilierung sehr sorgfältig herzustellenden Heizformteil entsprechend zu gestalten. Die erst während des Vulkanisationsvorganges geschaffene Asymmetrie kann weiters in unerwünschter Weise zur Entstehung innerer Spannungen im Gürtel- und Laufflächenbereich führen, die wiederum die Lebensdauer des Reifens negativ beeinflussen können.

Aus der US-PS 3656532 ist ein Fahrzeugluftreifen bekannt, bei dem eine asymmetrische Querschnittsgestalt daraus resultiert, daß ausgehend von der durch die Reifenwülste bestimmten Mittelebene eine Laufflächenhälfte wesentlich breiter ausgeführt ist als die andere und auch die an den verlängerten Laufflächenteil anschließende Seitenwand wesentlich länger ausgeführt wird als die andere Seitenwand. Eine derartige Ausbildung ist insbesondere dann zweckmäßig, wenn zur Erhöhung der Belastungsfähigkeit des Reifens das Volumen des Reifenhohlraums vergrößert werden soll, jedoch die Außenmaße des Reifens radial nach außen und axial zur Innenseite des Fahrzeugs hin etwa durch den Fahrzeugaufbau oder die Breite der Felge begrenzt sind. Das partielle Volumen des Reifenhohlraums, das axial auf einer Seite angeordnet ist, ist demnach größer als das partielle Volumen, das axial auf der anderen Seite der Mittelebene der Wülste liegt. Unter Wirkung des Aufblasdruckes erfolgt in unerwünschter Weise ein Kippen der Seitenwände und somit des Reifenscheitels. Mit dieser asymmetrischen Querschnittsgestalt kann daher das oben angesprochene Problem nicht gelöst werden.

Die Erfindung hat sich nun die Aufgabe gestellt, einen asymmetrischen Fahrzeugluftreifen der eingangs genannten, gettungs gemäßen Art zu schaffen, bei dem sich der Bodenaufstandsdruck in einem der Schulterabschnitte in der erwünschten Weise und im gewünschten Ausmaß auf besonders einfache Weise erhöhen läßt, wobei der Aufbau beziehungsweise die Gestaltung des Laufflächenteiles wie bei einem herkömmlichen Reifen erhalten bleiben kann.

Gelöst wird die gestellte Aufgabe erfindungsgemäß durch die Merkmale des Anspruchs 1.

Wird nun ein gemäß der Erfindung gestalteter Reifen auf einer Felge montiert und unter Druck gesetzt, ändert der Reifen durch den Aufblasdruck seine Gestalt, insbesondere erfährt jener Schulterbereich, der der längeren Seitenwand zugeordnet ist, eine Anhebung gegenüber dem anderen Schulterbereich, wodurch hier der Bodenaufstandsdruck in der erwünschten Weise erhöht wird. Die ursprüngliche Symmetrie der Karkasse im Laufflächenbereich sowie der Gürtellagen jeweils bezüglich der Reifenmittelebene ist dann nicht mehr gegeben. Vom Reifenaufbau her betrachtet ist es sehr einfach, schon den Reifenrohling mit einer Seitenwand zu versehen, die um das erwünschte Ausmaß länger ausgeführt ist als die zweite Seitenwand. Die Gestaltung des Seitenwandsegmentes der Heizform bestimmt schließlich jenen abgegrenzten Bereich, wo diese Verlängerung stattfindet. Da die Seitenwandlänge und die Länge des zugehörigen Heizformsegmentes einander leicht angepaßt werden können, sind unerwünschte Spannungen im Reifenkörper vermeidbar. Insgesamt gesehen liegt auch eine sehr wirtschaftliche Lösung vor, die es ohne weiteres auch gestattet, Reifen auf bestimmte Fahrzeugtypen abzustimmen. Dabei ist der abgegrenzte Bereich durch die Lage von zwei Stellen an der verlängerten Seitenwand, und zwar im fertig geheizten, jedoch unmontierten Zustand betrachtet, bestimmbar, wobei der Abstand b zwischen der oberen Stelle und einer durch den Scheitel der Lauffläche gehenden Normalen auf die Reifenmittelebene 0,15 H bis 0,35 H, der Abstand a zwischen der unteren Stelle und einer durch den unteren Endpunkt von H gehenden Normalen 0,04 H bis 0,15 H beträgt, wobei H die Querschnittshöhe des Reifens ist.

Nach einem weiteren Merkmal der Erfindung weist, im fertig geheizten, jedoch unmontierten Zustand betrachtet, die Außenkontur der verlängerten Seitenwand einen maximalen axialen Abstand C' von der Reifenmittelebene auf, der zumindest dem maximalen axialen Abstand C zur anderen Seitenwand entspricht, insbesondere ist C' bis zu 5% größer als C.

Bei einer weiteren Ausgestaltung der Erfindung kann die Lauffläche mit einer bezüglich der Reifenumfangsmittellinie asymmetrischen Profilierung versehen werden, wobei die der verlängerten Seitenwand näher liegende Laufflächenhälfte mit einer grobstolligeren oder bandförmigen Profilierung versehen ist. Diese Maßnahme liefert zusätzlich einen Beitrag zur Verminderung des Laufflächenabriebes im Schulterbereich.

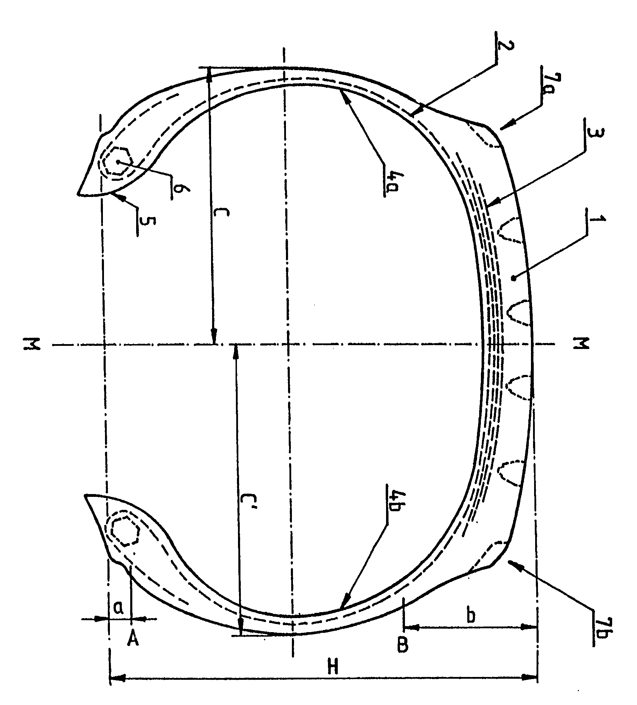

Weitere Merkmale, Vorteile und Einzelheiten der Erfindung werden nun anhand der Zeichnung, die ein Ausführungsbeispiel des erfindungsgemäßen Fahrzeugluftreifens darstellt, näher beschrieben. Hiebei zeigt die einzige Zeichnungsfigur einen gemäß der Erfindung ausgestalteten Fahrzeugluftreifen im Querschnitt.

In der Zeichnungsfigur ist der Reifen in jener Gestalt dargestellt, wie er fertig in der Heizform vorliegt beziehungsweise dieser entnommen wird. Als wesentliche Bestandteile weist der Fahrzeugluftreifen einen mit der Profilierung versehenen Laufflächenteil 1, eine Radialkarkasse 2, einen insbesondere mehrlagigen Gürtel 3, Seitenwände 4a, 4b und Wulstbereiche 5 auf. Die Radialkarkasse 2 ist durch Umschlingen von schematisch dargestellten Wulstkernen 6 im Reifenkörper verankert. Der Reifen besitzt zwei Schulterbereiche 7a, 7b, wobei die an die Reifenschulter 7b anschließende Seitenwand 4b länger ausgeführt ist als die zweite Seitenwand 4a. Die Verlängerung der Seitenwand 4b findet nun in einem abgegrenzten Bereich, der durch die Lage zweier Stellen A und B definiert ist, statt, wobei radial außerhalb der Stellen A und B die Außenkontur der Seitenwand 4b jener der Seitenwand 4a entspricht. Mit H, der Querschnittshöhe des Reifens, läßt sich die Lage der Stellen A und B durch Abstände a und b wie folgt eingrenzen :

a beträgt 0,04 bis 0,15 H

b beträgt 0,15 bis 0,35 H

Hiebei ist a der Abstand zwischen der Stelle a und einer durch den untere Endpunkt von H gehenden Normalen und b der Abstand zwischen der oberen Stelle B und einer durch den Scheitel der Lauffläche gehenden Normalen auf die Reifenmittelebene M-M. Zwischen den Stellen A und B ist die Seitenwand 4b asymmetrisch zur Seitenwand 4a und um 0,5 bis 5% länger ausgeführt als die korrespondierende Länge der Seitenwand 4a. Zwischen der Seitenwand 4a und der Reifenmittelebene M-M gibt es eine Stelle maximaler axialer Breite, die in der Zeichnungsfigur durch den Abstand C dargestellt ist. Der maximale axiale Abstand in der zweiten Reifenhälfte, ebenfalls zwischen der Reifenmittelebene M-M und der Außenkontur der Seitenwand 4b betrachtet, beträgt C'. Es ist nicht erforderlich, daß sich C und C' auf gleicher Höhe befinden. Die Ausgestaltung der Seitenwand 4b kann auch so getroffen werden, daß die maximale axiale Breite C' nicht nur an einer einzigen Stelle vorliegt. Jedenfalls ist C' größergleich C, insbesondere ist C' bis zu 5% größer als C.

Wird nun ein gemäß der Erfindung ausgestalteter Reifen auf einer Felge montiert und unter Druck gesetzt, findet eine Angleichung der Seitenwandkonturen der beiden Seitenwände 4a, 4b statt, wodurch der Schulterbereich 7b gegenüber dem Schulterbereich 7a eine Anhebung erfährt und in diesem Laufflächenrandabschnitt der Bodenaufstandsdruck in der erwünschten Weise erhöht wird. Die ursprüngliche Symmetrie des Laufflächenteiles, der Gürtellagen und des unterhalb des Laufflächenteiles verlaufenden Teiles der Radialkarkasse jeweils bezüglich der Reifenmittelebene M-M ist dann nicht mehr gegeben.

Es kann zweckmäßig sein, einen gemäß der Erfindung ausgestalteten Reifen zusätzlich mit einer bezüglich der Reifenumfangsmittellinie asymmetrischen Profilgestaltung zu versehen. Hiebei wird zu jenem Schulterbereich zu, wo ein größerer Abrieb zu erwarten ist, eine grobstolligere oder bandförmige Profilierung gewählt werden.

**Patentansprüche**

1. Fahrzeugluftreifen mit einer bezüglich der Reifenmittelebene (M-M) asymmetrischen Querschnittsgestalt, welcher, fertig geheizt, jedoch unmontiert, einen bezüglich der Reifenmittelebene symmetrischen Gürtelverband (3) und eine zumindest im Gürtelbereich unterhalb des Laufflächenteiles (1) symmetrisch zur Reifenmittelebene verlaufende Radialkarkasse (2) aufweist und welcher weiters mit in Wulstbereichen (5) endenden Seitenwänden (4a, 4b) versehen ist, wobei im fertig geheizten, jedoch unmontierten Zustand des Reifens die erste Seitenwand (4b) in einem abgegrenzten Bereich (A-B) länger ausgeführt ist als die zweite Seitenwand (4a), und wobei radial außerhalb dieses Bereiches (A-B) die Seitenwände (4a, 4b) und die Reifenwülste (5) symmetrisch zur Reifenmittelebene angeordnet sind, dadurch gekennzeichnet, daß der abgegrenzte Bereich (A-B) durch die Lage von zwei Stellen (A und B) an der gegenüber der zweiten um 0,5 bis 5% längeren ersten Seitenwand (4b) und zwar im fertig geheizten, jedoch unmontierten Zustand betrachtet, bestimmbar ist, wobei der Abstand b zwischen der radial äußeren Stelle B und einer durch den Scheitel der Lauffläche gehenden Normalen auf die Reifenmittelebene (M-M) 0,15 H bis 0,35 H, und der Abstand a zwischen der radial inneren Stelle A und einer durch den unteren Endpunkt von H gehenden Normalen 0,04 H bis 0,15 H beträgt, wobei H die Querschnittshöhe des Reifens ist.

2. Fahrzeugluftreifen nach Anspruch 1, dadurch gekennzeichnet, daß im fertig geheizten, jedoch unmontierten Zustand betrachtet, die Außenkontur der verlängerten Seitenwand (4b) einen maximalen axialen Abstand C' von der Reifenmittelebene (M-M) aufweist, der bis zu 5% größer ist als der maximale axiale Abstand C zur anderen Seitenwand (4a).

3. Fahrzeugluftreifen nach einem der Ansprüche 1 bis 2, dadurch gekennzeichnet, daß die Lauffläche mit einer bezüglich der Reifenumfangsmittellinie asymmetrischen Profilierung versehen ist, wobei die der verlängerten Seitenwand (4b) näher liegende Laufflächenhälfte mit einer grobstolligeren oder bandförmigen Profilierung versehen ist.

## Claims

1. A vehicle pneumatic tyre having a cross-sectional design which is asymmetrical with respect to the tyre central plane (M-M) and which, having been heated but not assembled, comprises a belt unit (3) which is symmetrical with respect to the tyre central plane and a radial carcass (2) which extends symmetrically to the tyre central plane at least in the belt zone beneath the tread area (1) and which is also provided with side walls (4a, 4b) which terminate in bead zones (5), wherein, when the tyre has been heated but not assembled, in a delimited zone (A-B) the first side wall (4b) is designed to exceed the length of the second side wall (4a), and wherein radially outside this zone (A-B) the side walls (4a, 4b) and the tyre beads (5) are arranged symmetrically with respect to the tyre central plane, characterised in that the delimited zone (A-B) can be defined by the position of two points (A and B) on the first side wall (4b), the length of which exceeds that of the second side wall by 0.5 to 5%, considered in the heated but unassembled state, where the distance b between the radially outer point B and a normal, passing through the apex of the tread, to the tyre central plane (M-M) amounts to 0.15 H to 0.35 H, and the distance a between the radially inner point A and a normal passing through the lower end point of H amounts to 0.04 H to 0.15 H, where H is the cross-sectional height of the tyre.

2. A vehicle pneumatic tyre as claimed in Claim 1, characterised in that considered in the heated but unassembled state, the outer contour of the lengthened side wall (4b) possesses a maximum axial distance C' from the tyre central plane (M-M) which is up to 5% greater than the maximum axial distance C from the other side wall (4a).

3. A vehicle pneumatic tyre as claimed in one of Claims 1 to 2, characterised in that the tread is provided with profiling which is asymmetrical with respect to the circumferential midline of the tyre, where that half of the tread which is closer to the lengthened side wall (4b) is provided with a more coarsely studded or strip-shaped profiling.

## Revendications

1. Bandage pneumatique pour véhicule dont la section est asymétrique par rapport au plan médian (M-M) du pneumatique, qui présente quand il est chaud et terminé mais non monté une ceinture composite (3) qui est symétrique par rapport au plan médian du pneumatique et une carcasse radiale (2) qui est symétrique par rapport au plan médian du pneumatique au moins dans la région de la ceinture située au-dessous de la surface de roulement (1) et qui est en outre muni de parois latérales (4a, 4b) se terminant dans des régions de talon (5), la première paroi latérale (4b) étant plus longue, dans une région délimitée (A-B), que la seconde paroi latérale (4a), et les parois latérales (4a, 4b) situées radialement à l'extérieur de cette région (A-B) et les talons (5) du pneumatique étant symétriques rapport au plan médian du pneumatique, caractérisé en ce que la région délimitée (A, B) peut être déterminée par la position de deux emplacements (A et B) de la première paroi latérale (4b) plus longue de 0,5 à 5% que la seconde à l'état chaud et terminé mais non monté, la distance (b) entre la position (B) qui est radialement à l'extérieur et une normale passant par le sommet de la surface de roulement dans le plan médian (M-M) du pneumatique étant de 0,15 H à 0,5 H et la distance (a) entre la position radialement à l'intérieur (A) et une normale passant par le point final inférieur de H étant de 0,04 H à 0,15 H, H représentant la hauteur en section du pneumatique.

2. Bandage pneumatique pour véhicule selon la revendication 1, caractérisé en ce qu'à l'état chaud et terminé mais non monté, le contour extérieur de la paroi latérale prolongée (4b) se trouve à une distance axiale maximale (C') du plan médian (M-M) du pneumatique qui est au maximum de 5% supérieure à la distance axiale maximale (C) de l'autre paroi latérale (4a).

3. Bandage pneumatique selon l'une des revendications 1 et 2, caractérisé en ce que la surface de roulement est munie d'un profilage asymétrique par rapport à la ligne médiane périphérique du pneumatique, la moitié de la surface de roulement qui est située plus près de la paroi latérale prolongée (4b) étant munie d'un profilage à grosses barrettes ou en forme de bandes.